# EUROPEAN PATENT APPLICATION

(11) **EP 3 174 065 A1**
(43) Date of publication of application: **31.05.2017**
(21) Application number: 15197151.2
(22) Date of filing: 30.11.2015
(51) Int. Cl.: G21C 19/07, G21F 5/008, G21F 5/14, B65D 88/54

(54) **INNER CASK ROLLER ASSEMBLY**

(71) Applicant: AREVA Inc., Lynchburg, VA 24501 (US)
(72) Inventor: WOLF, Uwe, Silver Spring, Maryland 20902 (US); BONDRE, Jayant R., Clarksville, Maryland 21029 (US)
(74) Representative: Lavoix

(57) **Abstract**

An inner cask roller assembly for lining the inner surface of a cask configured for receiving a canister includes: a first section of first rollers protruding inwardly from the inner surface at a first distance measured radially from the inner surface of the cask; a second section of second rollers adjacent the first section and protruding inwardly from the inner surface at a second distance measured radially from the inner surface of the cask, wherein the second distance is greater than the first distance; and a third section of second rollers adjacent the first section and protruding inwardly from the inner surface from the assembly at the first distance measured from the inner surface of the cask. A cask assembly includes the inner cask roller assembly. A method of using an inner cask roller assembly includes transferring a canister to or from the cask using the assembly.

## Description

### BACKGROUND

Part of the continued operation of a nuclear power plant is the removal and disposal of irradiated nuclear fuel assemblies. Nuclear power plants often use a horizontal type of dry storage device for irradiated fuel called a dry shielded canister (DSC).

In a previously designed system, horizontal transfer of canisters containing irradiated fuel between transfer cask and horizontal storage module (HSM) is accomplished by precision alignment of metallic rails inside the transfer cask and metallic rails inside the HSM and sliding the canister on these rails. The transfer motion of the canister from the cask is controlled by a linear actuator. The required force of the actuator is determined by the weight of the canister and the type of friction during transfer.

Sliding motion on rails has high coefficient factors of static and kinetic friction and therefore requires a high actuator force. As a result, sliding the metallic surface of the canister on metallic rails of the cask may leave scratches on the surface of the canister, which is a potential cause for corrosion and breaching the confinement of the canister for extended long term storage.

Therefore, there exists a need for improved canister transfer systems for reducing friction. Embodiments of the present application address these and other needs.

### SUMMARY

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

In accordance with one embodiment of the present disclosure, an inner cask roller assembly for lining the inner surface of a cask configured for receiving a canister is provided. The assembly includes: a first section of first rollers protruding inwardly from the inner surface at a first distance measured radially from the inner surface of the cask; a second section of second rollers adjacent the first section and protruding inwardly from the inner surface at a second distance measured radially from the inner surface of the cask, wherein the second distance is greater than the first distance; and a third section of second rollers adjacent the first section and protruding inwardly from the inner surface from the assembly at the first distance measured from the inner surface of the cask.

In accordance with another embodiment of the present disclosure, a cask assembly is provided. The assembly includes: a cask defining an inner surface having a recessed portion; and an inner cask roller assembly for lining the inner surface of the cask in the recessed portion, the assembly including a first section of first rollers protruding inwardly from the inner surface at a first distance measured radially from the inner surface of the cask, second section of second rollers adjacent the first section and protruding inwardly from the inner surface at a second distance measured radially from the inner surface of the cask, wherein the second distance is greater than the first distance, and a third section of second rollers adjacent the first section and protruding inwardly from the inner surface from the assembly at the first distance measured from the inner surface of the cask.

In accordance with another embodiment of the present disclosure, a method of manufacturing an inner cask roller assembly is provided. The method includes: obtaining a first portion having a first side and a second side, the first side configured to conform to the inner surface of a cask, and the second side including a plurality of closed loop channels having first and second longitudinal runs, wherein the plurality of closed loop channels are configured in at least first, second, and third sections; inserting a plurality of ball bearings in the closed loop channels; and covering the first portion with a second portion defining a plurality of holes for allowing the ball bearings to protrude from the first runs of the closed loop channels.

In accordance with another embodiment of the present disclosure, a method of using a cask having an inner cask roller assembly is provided. The method includes: obtaining a cask including an inner cask roller assembly for lining the inner surface of a cask configured for receiving a canister, the inner cask roller assembly a first section of first rollers protruding inwardly from the inner surface at a first distance measured radially from the inner surface of the cask, a second section of second rollers adjacent the first section and protruding inwardly from the inner surface at a second distance measured radially from the inner surface of the cask, wherein the second distance is greater than the first distance, and a third section of second rollers adjacent the first section and protruding inwardly from the inner surface from the assembly at the first distance measured from the inner surface of the cask; and transferring a canister to or from the cask.

In any of the embodiments described herein, the first section of first rollers may include at least one row of first rollers protruding inwardly from the inner surface for at least a portion of the longitudinal distance of the inner surface of the cask.

In any of the embodiments described herein, the first section of first rollers may include at least two rows of first rollers protruding inwardly from the inner surface for at least a portion of the longitudinal distance of the inner surface of the cask.

In any of the embodiments described herein, the assembly may include more than three sections from which rollers protrude.

In any of the embodiments described herein, the first rollers may have a smaller diameter than the second rollers.

In any of the embodiments described herein, the rollers may be ball bearings.

In any of the embodiments described herein, the rollers may be cylindrical rollers with a rotation axis perpendicular to the axis of movement of the canister in the cask.

In any of the embodiments described herein, the location of the first rollers may be at a different radius of curvature with respect to the center of the cask than the location of the second rollers, wherein the radius of the location of the second rollers is less than the radius of the location of the first rollers.

In any of the embodiments described herein, the rollers may be disposed in at least first, second, and third channels extending along at least a portion of the longitudinal distance of the inner surface of the cask.

In any of the embodiments described herein, the channels may be closed looped channels having first and second longitudinal runs.

In any of the embodiments described herein, the first and second rollers may travel uni-directionally in the looped channels.

In any of the embodiments described herein, the first and second rollers may protrude from the first runs or the closed looped channels into the cask.

In any of the embodiments described herein, the assembly further includes a non-destructive controlling device integrated in the assembly.

In any of the embodiments described herein, the rollers may be ball bearings, and a method of using the assembly may include rotating the canister in the cask around the longitudinal axis of the canister.

In any of the embodiments described herein, a method of using the assembly may include performing non-destructive controlling of the canister while moving the canister relative to the cask.

### DESCRIPTION OF THE DRAWINGS

The foregoing aspects and many of the attendant advantages of this disclosure will become more readily appreciated as the same become better understood by reference to the following detailed description, when taken in conjunction with the accompanying drawings, wherein:
FIGURE 1 is an isometric view of an inner cask roller assembly for transferring a canister to and from a cask in accordance with one embodiment of the present disclosure;
FIGURE 2 is an isometric view of the inner cask roller assembly in the cask of FIGURE 1;
FIGURES 3-5 are respective isometric, top, and exploded views of the inner cask roller assembly of FIGURE 1;
FIGURES 6 and 7 are schematics showing the annulus region between a canister and a cask;
FIGURES 8 and 9 are cross-sectional views of the inner cask roller assembly; and
FIGURES 10-12 are cross-sectional views of inner cask roller assemblies in accordance with other embodiments of the present disclosure.

### DETAILED DESCRIPTION

The detailed description set forth below in connection with the appended drawings, where like numerals reference like elements, is intended as a description of various embodiments of the disclosed subject matter and is not intended to represent the only embodiments. Each embodiment described in this disclosure is provided merely as an example or illustration and should not be construed as preferred or advantageous over other embodiments. The illustrative examples provided herein are not intended to be exhaustive or to limit the disclosure to the precise forms disclosed. Similarly, any steps described herein may be interchangeable with other steps, or combinations of steps, in order to achieve the same or substantially similar result.

In the following description, numerous specific details are set forth in order to provide a thorough understanding of exemplary embodiments of the present disclosure. It will be apparent to one skilled in the art, however, that many embodiments of the present disclosure may be practiced without some or all of the specific details. In some instances, well-known process steps have not been described in detail in order not to unnecessarily obscure various aspects of the present disclosure. Further, it will be appreciated that embodiments of the present disclosure may employ any combination of the features described herein.

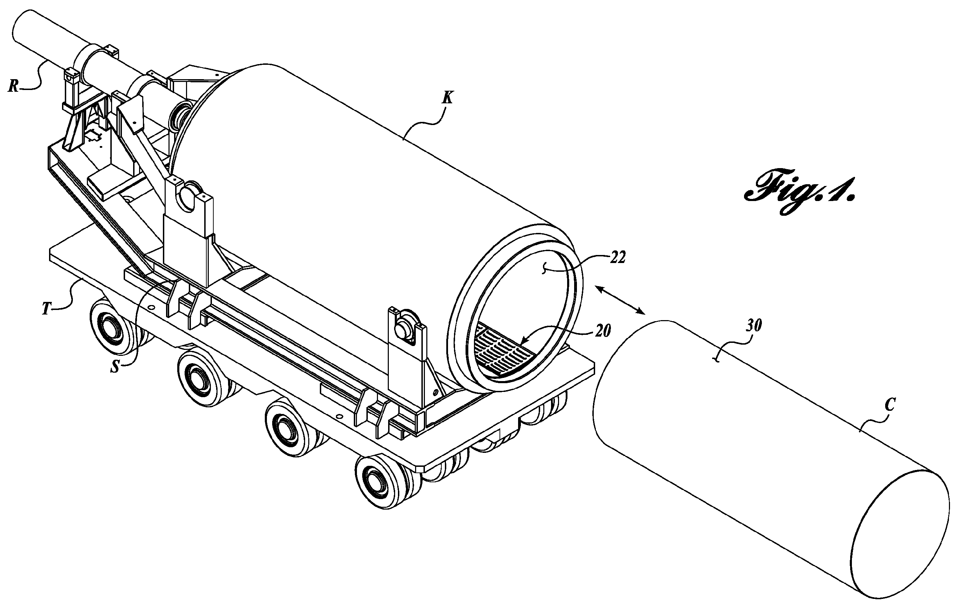

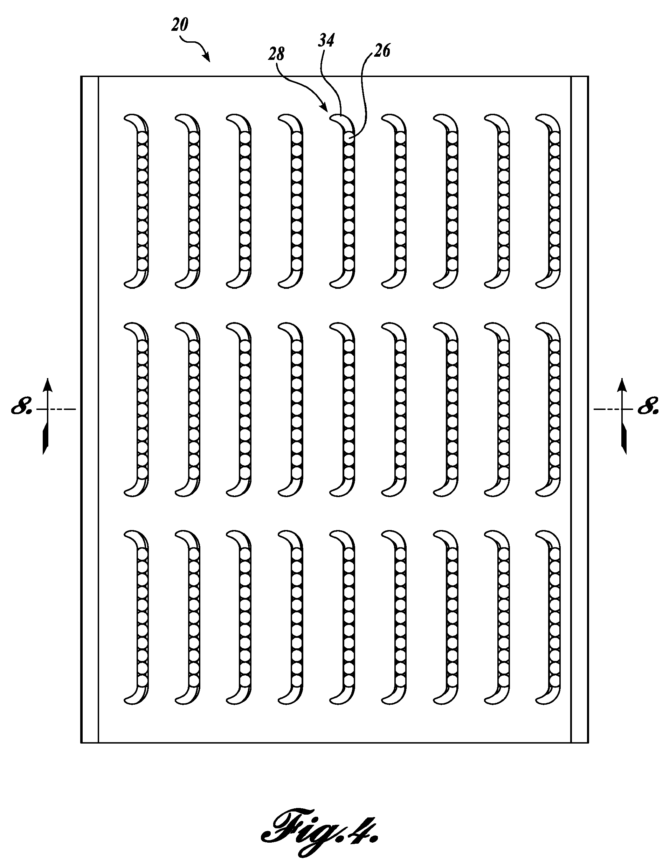

Embodiments of the present disclosure are directed to transfer devices for use with transfer and transportation casks used for the dry storage and containment of radioactive materials. Referring to FIGURES 1-5, an inner cask roller assembly 20 is provided on the inner surface 22 of a cask K having an inner cavity 24 with a substantially circular cross-section. The inner cask roller assembly 20 is used to reduce friction between a canister C having a substantially circular outer cross-section received in the cask K during transfer of the canister C to or from the cask K.

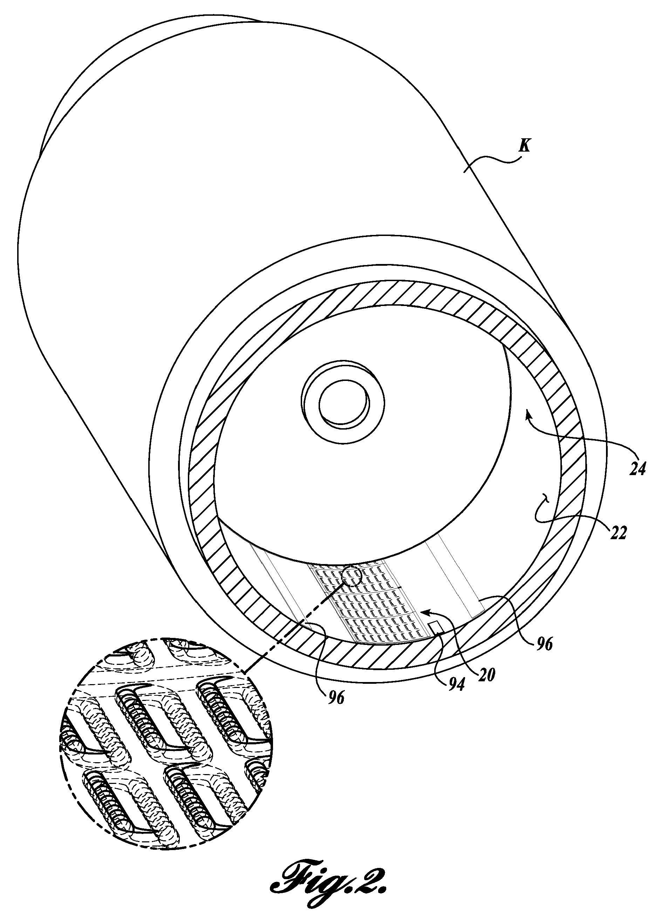

Referring to FIGURES 2-4, the roller assembly 20 includes a plurality of rollers 26 protruding inwardly from the inner surface 22 of the cask K. The rollers 26 allow the canister C to move with reduced friction into and out of the cask K. Of note, the term "roller 26" is used to generally describe the rollers. However, first roller 52 and second roller 64 may be used to more specifically describe the sizing of different rollers in different sections of the roller assembly 20, both generally classified as "rollers 26".

As can be seen in FIGURE 2, the roller assembly 20 or the inner surface 22 of the cask K may include an optional control device 96 for performing non-destructive controlling of the canister while moving the canister C relative to the cask K. In addition, optional pads 94, such as bearing pads, are provided to further enable movement of the canister C relative to the cask K.

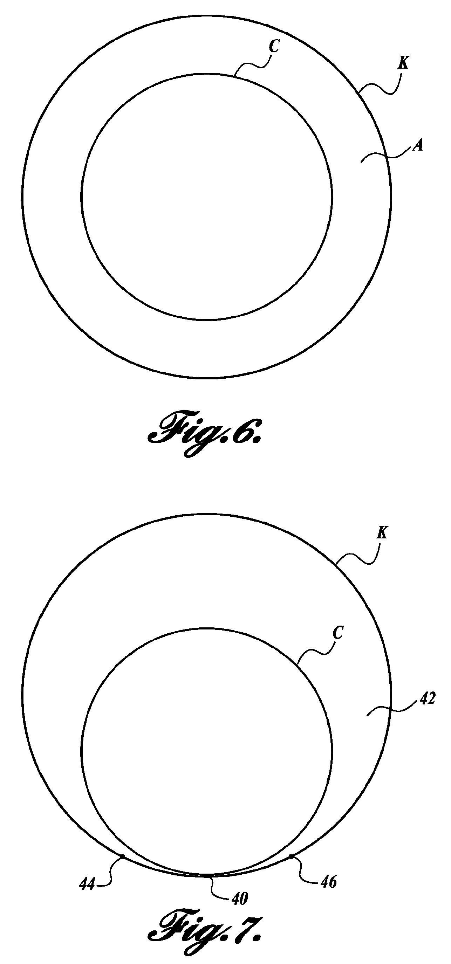

As can be seen in the schematic of FIGURES 6 and 7, a canister C is typically designed to have a slightly smaller outer diameter than the diameter of the inner surface 22 of the cask K, so as to create a gap or annulus A when the canister C is inserted into the cask K. When the canister C is inserted into a cask K in a horizontal configuration, the canister C rests on the cask K at one or more bottom inner point(s) 40 on the cask K. Therefore, the horizontal configuration creates a non-uniform annulus 42 that is smallest near the point(s) of contact 40 between the cask K and the canister C. The non-uniform annulus 42 gets larger with radial movement in either direction from the point(s) of contact 40, for example, at points 44 and 46.

Although illustrated as one point of contact 40 throughout the application, there may be more than one lowest point of contact, for example, two lowest points of contact.

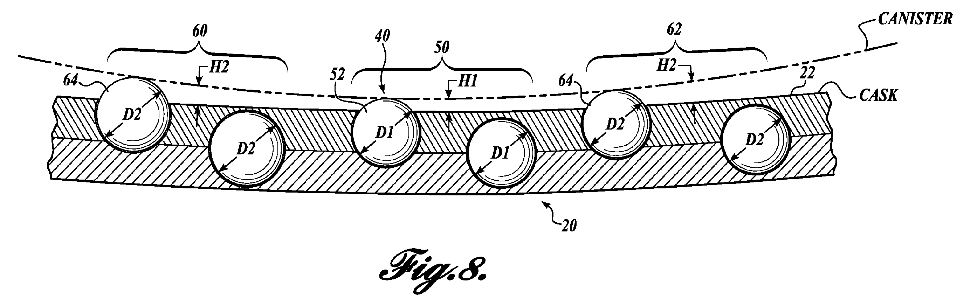

Because of the change in annulus with radial travel from the point(s) of contact 40, the roller assembly 20 as described herein accommodates such change to provide contact between the canister C and the roller assembly 20 as multiple points on the canister C. In accordance with embodiments of the present disclosure, differently sized rollers 52 and 64 protrude inwardly from the inner surface 22 of the cask K at variable distances measured radially from the inner surface 22 of the cask K (for example, compare H1 and H2 in FIGURE 8).

Referring to FIGURE 8, a close-up, cross-sectional view of a portion of the roller assembly 20 of FIGURES 1-5 is shown. In the illustrated embodiment, the roller assembly 20 has a first section 50 of first rollers 52 having a first diameter D1, and at least second and third sections 60 and 62, both adjacent the first section 50, each having second rollers 64 having a second diameter D2. To accommodate for the change in annulus, the second diameter D2 is larger than the first diameter D1 so that all rollers 52 and 64 protrude inwardly from the inner surface 22 at variable distances H1 and H2 measured radially from the inner surface of the cask.

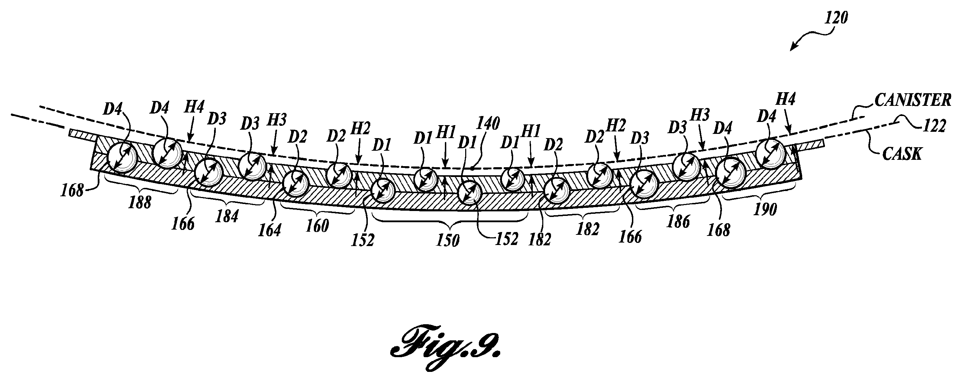

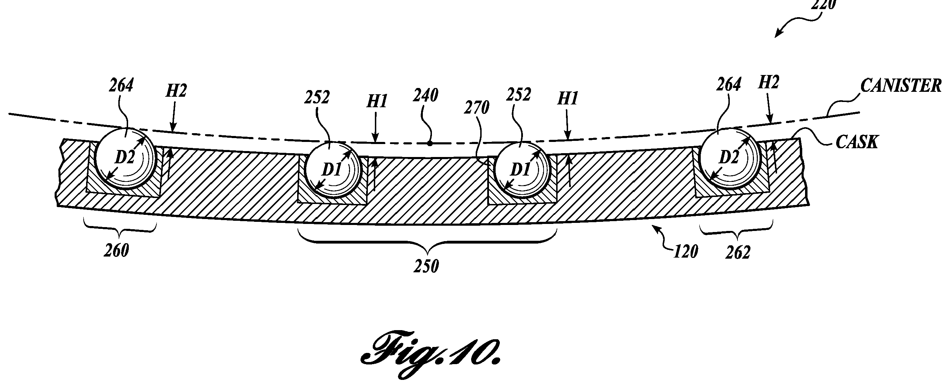

In FIGURE 8, in one embodiment of the present disclosure, the roller assembly 20 includes three sections 50, 60, 62 of rollers 52 and 64. Each section 50, 60, 62 includes a row of rollers 52 or 64 protruding inwardly from the inner surface 22 of the cask K. However, other embodiments of the present disclosure may include more than three sections of rollers (see FIGURE 9). Moreover, some sections may include more than one row of rollers (see, e.g., FIGURES 9 and 10).

Referring to FIGURE 9, in other embodiments of the present disclosure, the roller assembly 120 includes more than three sections 150, 160, 182, 184, 186, 188, 190, etc., of differently sized rollers 152, 164, 166, 168, etc., having increasing size with successive sections from the lowest point(s) of contact 140 of the roller assembly 120. In the illustrated embodiment of FIGURE 9, first section 150 includes two rows of rollers 152 protruding inwardly from the inner surface 122 of the cask K having a lowest point(s) of contact 140 between the two rollers in the first section 150.

In the illustrated embodiment of FIGURES 1-5, the roller assembly 20 includes a plurality of rollers 26 configured for movement in a plurality of channels 28 extending along at least a portion of the longitudinal distance of the inner surface 22 of the cask K. Each channel 28 has an opening 34 such that the rollers 26 are contained within the channel 28, but with a portion of the rollers 26 protruding to interface with the outer surface 30 of a canister C received within the cask K. In the illustrated embodiment, the openings 34 are substantially longitudinal and extend in parallel rows along the axial length of the inner surface 22 of the cask K. The openings 34 may extend the full axial length of the inner surface 22 of the cask K or a suitable portion thereof.

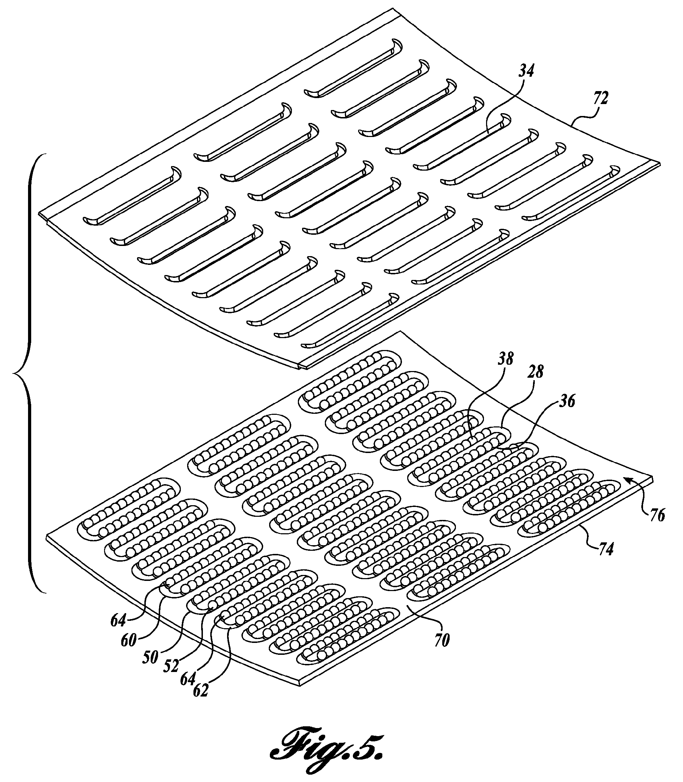

Referring to FIGURE 5, an exploded view of the roller assembly 20 shows that each channel 28 is configured as a looped channel such that the rollers 26 travel uni-directionally in the looped channel depending on whether the canister C is being inserted or retrieved from the cask K (see FIGURE 1). In the illustrated embodiment, the looped channels 28 include a first run 36 and a second (return) run 38. Openings 34 only allow for a portion of the rollers 26 in the first runs 36 of the looped channels 28 to protrude from the openings 34 and interface with the canister C and preventing the return rollers in the second runs 38 in the looped channels 28 from interfacing with the canister C. Therefore, openings 34 allow for single direction roller travel relative to the canister C, when the canister is moved on the roller assembly 20, but return travel in the second run 38.

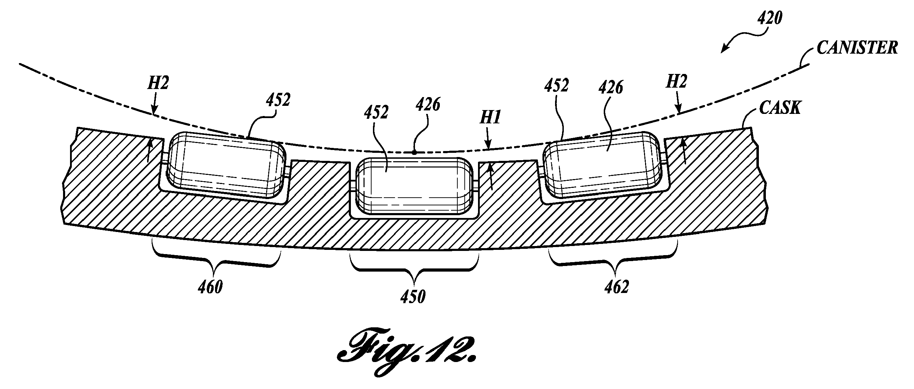

In the illustrated embodiments of FIGURES 1-5 and 8 and FIGURE 9, the rollers are ball bearings. Ball bearings are used to enable rotational or linear movement of the canister in the cask K, while reducing friction and handling stress. The rollers 26 on the inner surface 22 of the cask K roll as the canister C moves relative to the cask K. Such rolling reduces the friction between the inner surface 22 of the cask K and the canister C. The ball bearings may be made from metal or alloys, for example, steel, or from ceramics. It should be appreciated, however, that other types of rollers 26 besides ball bearings are within the scope of the present disclosure. For example, the rollers may be cylindrical rollers 426 instead of ball bearing rollers 26 (see FIGURE 12).

As indicated above, the rollers may be sized differently in adjacent sections to protrude inwardly from the inner surface 22 of the cask K at a distance measured radially from the inner surface of the cask K to accommodate the non-uniform annulus 42 shown in FIGURE 7. Ball bearing rollers 26 may also be used to rotate the canister C in the cask K around the longitudinal axis of the canister C.

Referring to FIGURE 5, a roller assembly 20 in accordance with the illustrated embodiment may be manufactured by obtaining a first portion 70 having a first side 74 and a second side 76, the first side 74 configured to conform to the inner surface 22 of a cask K, the second side 76 including a plurality of closed loop channels 28 having first and second longitudinal runs 36 and 38, wherein the plurality of closed loop channels 28 are configured in at least first, second, and third sections 50, 60, and 62. A plurality of rollers 26, shown as ball bearings, can be inserted in each of the closed loop channels 28. The first portion 70 can be covered with a second portion 72 defining a plurality of openings 34 for allowing the rollers 26 to protrude only from the first runs 26 of the closed loop channels 28.

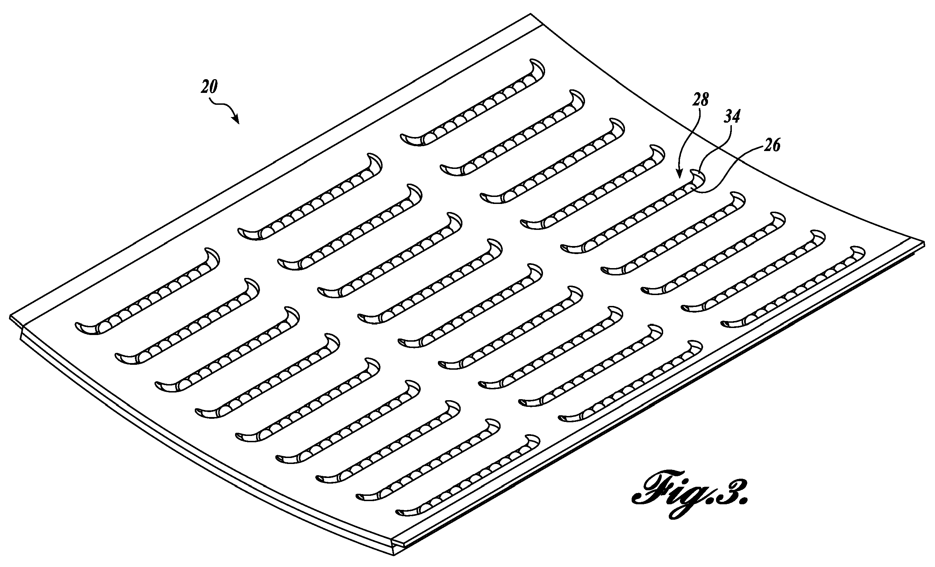

In accordance with embodiments of the present disclosure, the roller assembly 20 may be formed in the cask K at the time of manufacture or retrofitted for the cask K. The cask K may be manufactured with a recess in a portion of the inner surface 22 to accommodate the roller assembly 20. Moreover, the roller assembly 20 may be an inserted device inserted only when needed, for example, for inserting a canister C into a cask K. As can be seen in FIGURES 3-5, the roller assembly 20 is configured as a tray for insertion into the cask K.

In the illustrated embodiment of FIGURES 1 and 2, the roller assembly 20 is sized to cover an angular distance sufficient to prevent rolling movement of the canister C in the cask K, so as to prevent contact between the canister C and the cask K. In the illustrated embodiment, the angular distance of the roller assembly 20 is about 30 degrees of the inner circumference of the cask K. In accordance with embodiments of the present disclosure, the angular distance of the roller assembly 20 is in the range of about 20 degrees to about 80 degrees.

Referring to FIGURES 10-12, alternate embodiments of the present disclosure are provided. The embodiments of FIGURES 10-12 are similar to the embodiments of FIGURES 1-5 and 8 and FIGURE 9, except for differences regarding the rollers.

In the illustrated embodiment of FIGURE 10, the rollers 220 are roller bearings 226 contained in a socket 270 instead of a channel. Therefore, the rollers are free to rotate in any direction relative to the socket 270. Like the roller bearing assemblies 20 and 120 of respective FIGURES 1-5 and FIGURE 8, the roller assembly 220 of FIGURE 10 includes rollers having a greater diameter as the rollers 226 move away from the lowest point(s) of contact 240 for the canister C (see FIGURE 7). The lowest point(s) of contact 240 for the canister C is between two rollers 252 in section 250. However, the embodiment of FIGURE 10 could be configured to only have one roller 252 in section 250 (similar to the configuration in FIGURE 8).

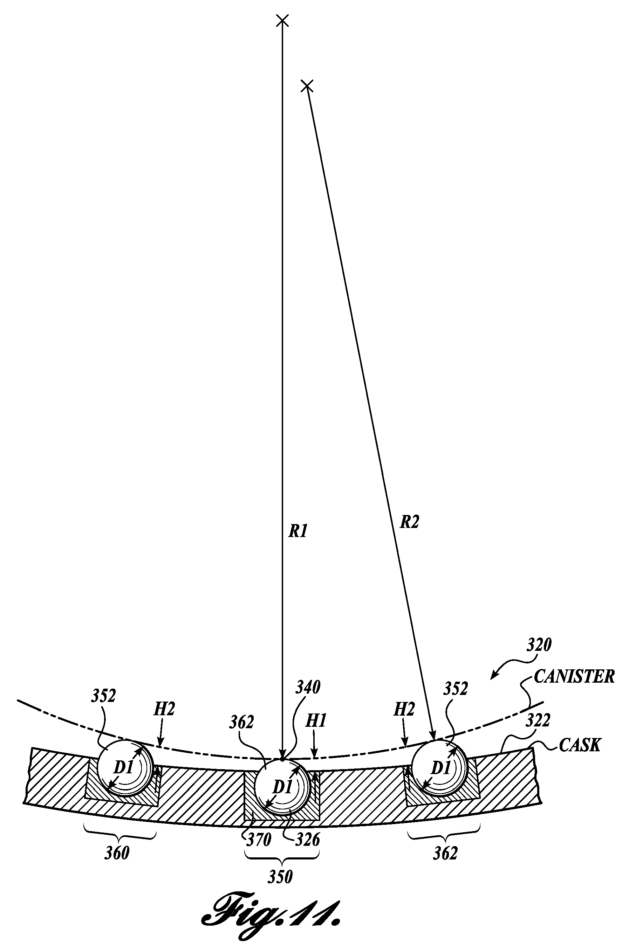

In the illustrated embodiment of FIGURE 11, the rollers 326 of the roller assembly 320 are also roller bearings contained in sockets 370. The rollers 326 are not sized differently, but instead are placed along different radii of curvature R1 and R2 having different radial center points and radial lengths to accommodate a non-uniform annulus 42 that is smallest near the point(s) of contact 340 between the cask K and the canister and gets larger with radial movement in either direction. Therefore, rollers in sections 350 and 360 protrude inwardly from the inner surface 322 of the cask K at variable distances measured radially from the inner surface 322 of the cask K (for example, compare H1 and H2 in FIGURE 11). This embodiment could also be configured to have the lowest point(s) of contact 340 for the canister C between two rollers 352 in section 350 (similar to the configuration in FIGURE 10).

In the illustrated embodiment of FIGURE 12, the rollers are cylindrical rollers 452 instead of ball bearings. The cylindrical rollers are spaced similar to the rollers in FIGURE 11 to accommodate a non-uniform annulus that is smallest near the lowest point(s) of contact 440 between the cask K and the canister and gets larger with radial movement in either direction. This embodiment could also be configured to have the lowest point(s) of contact 440 for the canister C between two rollers 452 in section 450 (similar to the configuration in FIGURE 10). To accommodate for the change in annulus, this embodiment also could be configured include rollers that get larger in cross-sectional diameter as the rollers move away from the lowest point(s) of contact 440.

One advantageous effect of transfer systems of the present disclosure is reduced sliding scratches on the surface of the canister. Another advantageous effect is a reduced linear actuator force required to move the canister during transfer, which results in reduced requirements in actuator power, therefore smaller sized transferred equipment and lower cost.

The principles, representative embodiments, and modes of operation of the present disclosure have been described in the foregoing description. However, aspects of the present disclosure which are intended to be protected are not to be construed as limited to the particular embodiments disclosed. Further, the embodiments described herein are to be regarded as illustrative rather than restrictive. It will be appreciated that variations and changes may be made by others, and equivalents employed, without departing from the spirit of the present disclosure. Accordingly, it is expressly intended that all such variations, changes, and equivalents fall within the spirit and scope of the present disclosure, as claimed.

## Claims

1. An inner cask roller assembly for lining the inner surface of a cask configured for receiving a canister, the assembly comprising:
a first section of first rollers protruding inwardly from the inner surface at a first distance measured radially from the inner surface of the cask;
a second section of second rollers adjacent the first section and protruding inwardly from the inner surface at a second distance measured radially from the inner surface of the cask, wherein the second distance is greater than the first distance; and
a third section of second rollers adjacent the first section and protruding inwardly from the inner surface from the assembly at the first distance measured from the inner surface of the cask.

2. The assembly of Claim 1, wherein the first section of first rollers includes at least one row of first rollers protruding inwardly from the inner surface for at least a portion of the longitudinal distance of the inner surface of the cask, namely at least two rows of first rollers protruding inwardly from the inner surface for at least a portion of the longitudinal distance of the inner surface of the cask.

3. The assembly of Claim 1 or 2, comprising more than three sections from which rollers protrude.

4. The assembly of any Claims 1 to 3, wherein the first rollers have a smaller diameter than the second rollers.

5. The assembly of any Claims 1 to 4, wherein the rollers are ball bearings or wherein the rollers are cylindrical rollers with a rotation axis perpendicular to the axis of movement of the canister in the cask.

6. The assembly of any of Claims 1 to 5, wherein the location of the first rollers is at a different radius of curvature with respect to the center of the cask than the location of the second rollers, wherein the radius of the location of the second rollers is less than the radius of the location of the first rollers.

7. The assembly of any of Claims 1 to 6, wherein the rollers are disposed in at least first, second, and third channels extending along at least a portion of the longitudinal distance of the inner surface of the cask.

8. The assembly of Claim 7, wherein the channels are closed looped channels having first and second longitudinal runs.

9. The assembly of Claim 8, wherein the first and second rollers travel uni-directionally in the looped channels and/or wherein the first and second rollers protrude from the first runs or the closed looped channels into the cask.

10. The assembly of any of Claims 1 to 9, further comprising non-destructive controlling devices integrated in the assembly.

11. A cask assembly, comprising:
a cask defining an inner surface having a recessed portion; and
an inner cask roller assembly for lining the inner surface of the cask in the recessed portion, the assembly including a first section of first rollers protruding inwardly from the inner surface at a first distance measured radially from the inner surface of the cask, second section of second rollers adjacent the first section and protruding inwardly from the inner surface at a second distance measured radially from the inner surface of the cask, wherein the second distance is greater than the first distance, and a third section of second rollers adjacent the first section and protruding inwardly from the inner surface from the assembly at the first distance measured from the inner surface of the cask.

12. A method of manufacturing an inner cask roller assembly, the method comprising:
obtaining a first portion having a first side and a second side, the first side configured to conform to the inner surface of a cask, and the second side including a plurality of closed loop channels having first and second longitudinal runs, wherein the plurality of closed loop channels are configured in at least first, second, and third sections;
inserting a plurality of ball bearings in the closed loop channels; and
covering the first portion with a second portion defining a plurality of holes for allowing the ball bearings to protrude from the first runs of the closed loop channels.

13. A method of using a cask having an inner cask roller assembly, the method comprising:
obtaining a cask including an inner cask roller assembly for lining the inner surface of a cask configured for receiving a canister, the inner cask roller assembly a first section of first rollers protruding inwardly from the inner surface at a first distance measured radially from the inner surface of the cask, a second section of second rollers adjacent the first section and protruding inwardly from the inner surface at a second distance measured radially from the inner surface of the cask, wherein the second distance is greater than the first distance, and a third section of second rollers adjacent the first section and protruding inwardly from the inner surface from the assembly at the first distance measured from the inner surface of the cask; and
transferring a canister to or from the cask.

14. The method of Claim 13, wherein the rollers are ball bearings, and rotating the canister in the cask around the longitudinal axis of the canister.

15. The method of Claim 13 or 14, further comprising performing non-destructive controlling of the canister while moving the canister relative to the cask.
